# EUROPEAN PATENT SPECIFICATION

(11) **EP 0 473 812 B1**
(45) Date of publication and mention of the grant of the patent: **22.05.1996**
(21) Application number: 90116888.0
(22) Date of filing: 03.09.1990
(51) Int. Cl.: C08G 77/445, C08G 63/695, G11B 5/70, B41M 5/00, C08G 18/61

(54) **Heat-sensitive recording material having a back layer formed from a siloxane-modified polyester resin**
Hitzeempfindliche Aufzeichnungsmaterialien mit einer Rückenschicht aus einem Polyester-Polysiloxanharz
Materiaux d'enregistrement avec une couche support en résine polyester-polysiloxane

(43) Date of publication of application: 11.03.1992
(73) Proprietor: DAINICHISEIKA COLOR & CHEMICALS MFG. CO. LTD., Chuo-ku Tokyo (JP); UKIMA COLOUR & CHEMICALS MFG. CO. LTD., Chuo-ku Tokyo (JP)
(72) Inventor: Hanada, Kazuyuki, Kita-katsushika-gun, Saitama-ken (JP); Misaizu, Iwao, Urawa-shi, Saitama-ken (JP); Shibuya, Akihiko, Katsushika-ku, Tokyo (JP); Kuriyama, Katsumi, Koshi-gaya-shi, Saitama-ken (JP)
(74) Representative: Wächtershäuser, Günter, Prof. Dr.

(56) References cited:
- EP-A- 0 174 713
- EP-A- 0 175 092
- EP-A- 0 268 437
- WO-A-86/04072
- DERWENT, accession no. 90-019518, WPIL, Derwent Publications Ltd, London, GB; & JP-A-1 299 819
- DERWENT, accession no. 90-174257, WPIL, Derwent Publications Ltd, London, GB; & JP-A 2 113 015
- DERWENT, accession no. 90-181254, WPIL, Derwent Publications Ltd, London, GB; & JP-A-2 113 421

## Description

The present invention relates to a heat-sensitive recording material having a back layer formed from a polyester resin, and more specifically a siloxane-modified polyester resin excellent not only in non-tacky property, lubricating property, blocking resistance but also in transfer resistance and bleed resistance.

Silicon compounds, especially siloxanes (silicone) oils have heretofore found wide-spread utility in application fields such as defoaming agents, release agents, textile treatment agents, various coating agents, paints, inks, and electrical or electronic parts or devices for their excellent properties such as non-tacky property, lubricating property, water repellency, flexibility and heat resistance. Siloxane compounds containing one or more reactive organic functional group (active hydrogen atom) have also been used, whereby they have also been increasingly employed for the modification of resins and the like and for the treatment of surfaces.

Siloxane-modified polyester resin comprising a copolymer of a siloxane compound containing active hydrogen atoms and a lactone compound is disclosed in EP-A-0174713. Copolymers which are the reaction products of siloxanes having reactive hydrogen atoms and ε-caprolactone are described in EP-A-0175092 and WO-A-86/04072.

Resins siloxane-modified using such an active-hydrogen-atom-containing siloxane compound are satisfactory in non-tacky property, lubricating property, blocking resistance and the like. The siloxane compound used as the modifier however contains one or more non-reactive siloxane compounds, which do not contain any active hydrogen atom, in a relatively high total proportion as impurities. Separation of such non-reactive siloxane compounds is very difficult because the non-reactive compounds and the reactive compound are not substantially different in physical properties.

Such non-reactive siloxane compounds are naturally contained as impurities in a conventional siloxane-modified resin. When a coating is formed with such a siloxane-modified resin, the non-reactive siloxane compounds contained as impurities undergo bleeding to the surface so that various problems are caused. A coating made of a siloxane-modified resin is crosslinked (hardened) with a crosslinking agent (hardening agent) upon its formation in many instances. The non-reactive siloxane compounds contained as impurities in the coating however do not react with the crosslinking agent, whereby the above-described problem of bleeding still occurs. The siloxane compounds thus bled then cause problems such that they may transfer to a material in contact with the coating and may smear the material or, when a magnetic layer of a magnetic recording medium or a back layer of a heat-sensitive recording material is formed with the above modified resin by way of example, they stick on a thermal head and considerably deteriorate the performance of the head.

An object of the present invention is therefore to provide a siloxane-modified polyester resin excellent not only in non-tacky property, lubricating property and blocking resistance but also in transfer resistance and bleed resistance, which can be used as a back layer of a heat-sensitive recording material.

According to the present invention there is provided a heat-sensitive recording material construed of a base sheet, a heat-sensitive recording layer provided on one side of the base sheet and a back layer formed from a siloxane-modified polyester resin, provided on the other side of the base sheet, wherein said polyester resin comprises a copolymer of a siloxane compound containing at least one active hydrogen atom selected from the group consisting of amino, epoxy, hydroxyl, mercapto and carboxyl groups, and a lacton compound, the total content of unreacted siloxane compounds in the said copolymer being less than 1.0 wt %.

The siloxane compound having at least one active hydrogen atom is converted to a copolymer with the lactone compound by copolymerizing them and processing the resultant product under reduced pressure. The copolymer is not removed under reduced pressure. Any non-reactive siloxane compounds are however not converted to materials of a high molecular weight so that these non-reactive siloxane compounds are removed under reduced pressure. In this manner, such non-reactive siloxane compounds contained in a siloxane compound to be used as a raw material can be eliminated easily, thereby providing a siloxane-modified polyester resin having not only excellent non-tacky property, lubricating property, blocking resistance and the like but also superb transfer resistance, bleed resistance and the like.

The siloxane-modified polyester resin of the invention is therefore very useful as a binder for magnetic layers of magnetic recording media such as magnetic tapes, as back coats formed on the back sides of such magnetic recording media, as a binder for thermal transfer films, as heat-resistant lubricating layers for the prevention of sticking of thermal heads, as synthetic leathers, as textile coating agents, as surface treatment agents, as release layers such as mold release layers, as a binder for paints and printing inks.

The above and other objects, features and advantages of the present invention will become apparent from the following description and the appended claims.

The invention will hereinafter be described in further detail by preferred embodiments.

The siloxane-modified polyester resin used in the invention can be obtained by copolymerizing a siloxane compound, which contains at least one active hydrogen atom, with a lactone compound and then processing the resultant product under reduced pressure.

Preferred examples of the active-hydrogen-atom-containing siloxane compound employed in the invention includes:
(1) Amino-modified siloxane oils: 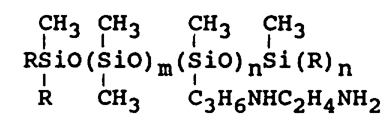 wherein m = 1-10, n = 2-10, and R = CH₃ or OCH₃. 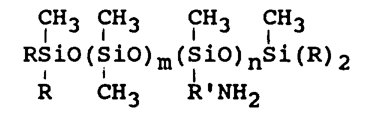 wherein m = 1-10, n = 2-10, R = CH₃ or OCH₃, and R' = divalent aliphatic group or aliphatic ether group. 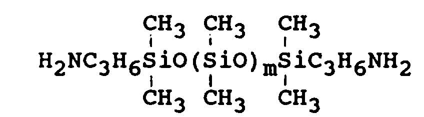 wherein m = 0-200. 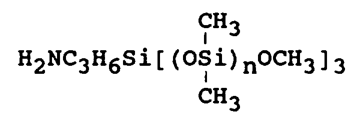 wherein n = 2-10. 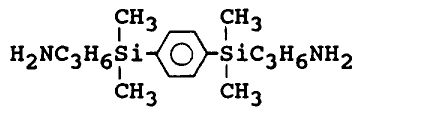 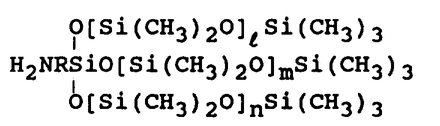 wherein branched sites = 2-3, R = lower alkyl, ℓ = 2-200, m = 2-200, and n = 2-200. 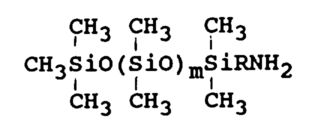 wherein n = 1-200, and R = lower alkyl.
(2) Epoxy-modified siloxane oils. 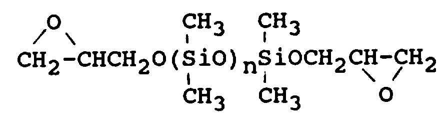 wherein n = 1-200. 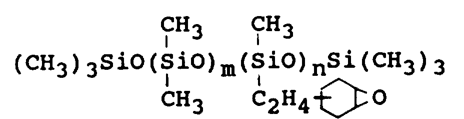 wherein m = 1-10, and n = 2-10. 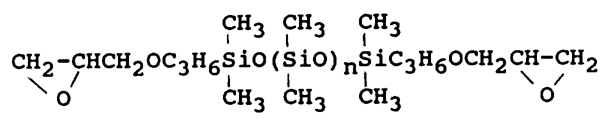 wherein n = 1-200. 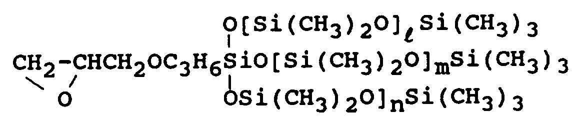 wherein branched sites = 2-3, R = lower alkyl, ℓ = 2-200, m = 2-200, and n = 2-200. 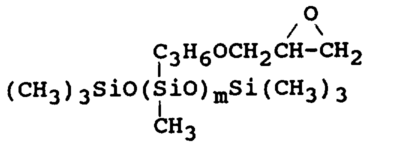 wherein n = 1-10. 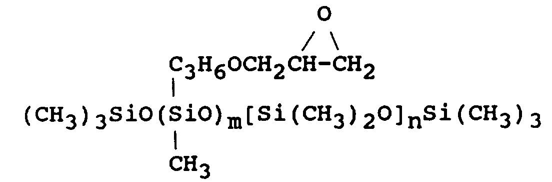 wherein m = 1-10, and n = 2-10.
   The above epoxy compounds can be used after introducing an active hydrogen atom in at least one end thereof by reacting them with a polyol, polyamine, polycarboxylic acid or the like.
(3) Alcohol-modified siloxane oils: 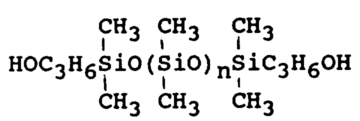 wherein n = 1-200. 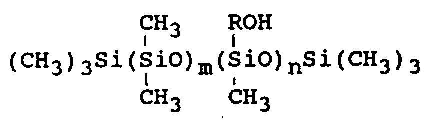 wherein m = 1-10, n = 2-10, and R = divalent aliphatic group or aliphatic ether group. 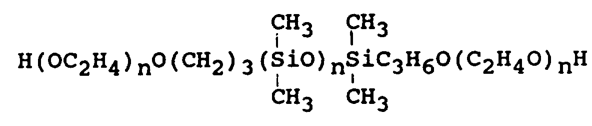 wherein n = 0-200. 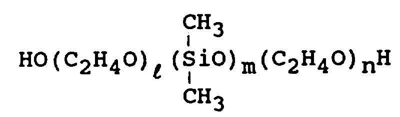 wherein ℓ = 1-10, m = 10-200, and n = 1-5. 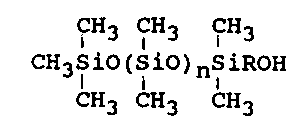 wherein n = 1-200, and n = lower alkyl. 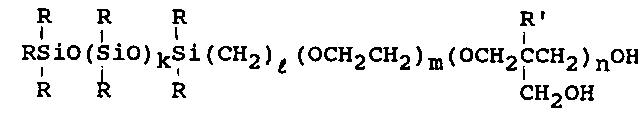 wherein R = lower alkyl, R' = hydrogen atom or alkyl group, k = 1-250, ℓ = 0-5, m = 0-50, and n = 1-5. 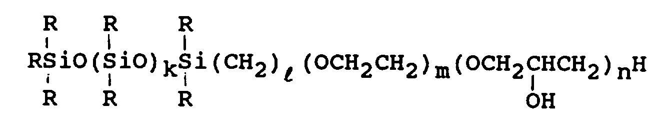 wherein R = lower alkyl, R' = hydrogen atom or alkyl group, k = 1-250, ℓ = 0-5, m = 0-50, and n = 2-5.
(4) Mercapto-modified siloxane oils: 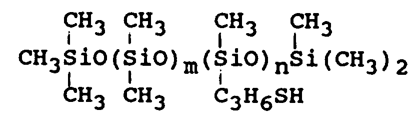 wherein m = 1-10, and n=2-10. 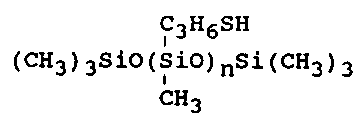 wherein n = 2-10. 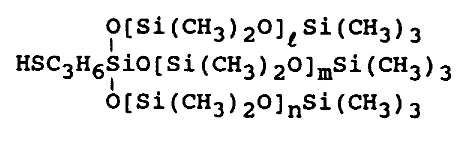 wherein branched sites: 2 or 3, R = lower alkyl, ℓ = 2-200, m = 2-200, and n = 2-200. 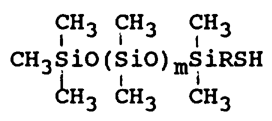 wherein n = 1-200, and R = lower alkyl.
(5) Carboxyl-modified siloxane oils: 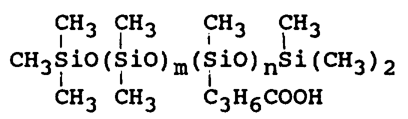 wherein m = 1-10, and n=2-10. 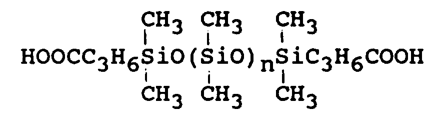 wherein n = 1-200. 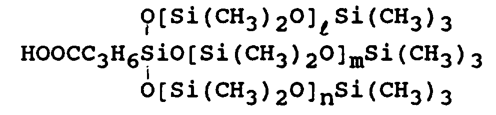 wherein branched sites: 2 or 3, R = lower alkyl, ℓ = 2-200, m = 2-200, and n = 2-200. 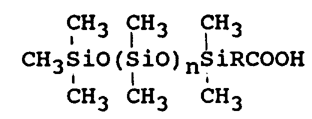 wherein n = 1-200, and R = lower alkyl.

It is to be noted that the above active-hydrogen-atom-containing siloxane compounds are merely illustrative of siloxane compounds preferred in the invention and the invention is not necessarily limited to such exemplified siloxanes. The above-exemplified compounds and other siloxane compounds are commercially sold these days and are hence readily available on the market. They are all usable in the invention.

The term "lactone compound", which is reacted to the active-hydrogen-atom-containing siloxane compound in the invention, means a lactone compound capable of forming a polyester by conventional ring-opening lactone polymerization, such as ε-caprolactone and 6-valerolactone. Their mono- or di-substituted derivatives such as their mono- or dialkyl-, halogen-, haloalkyl-, alkoxyl- or alkoxyalkyl-substituted derivatives can also be used similarly. Especially preferred lactone compounds are ε-caprolactone and its derivatives.

The reaction between the siloxane compound and the lactone compound is effected by mixing them and then reacting them at 150-200°C for several hours to somewhat longer than ten hours, preferably under a nitrogen gas stream while using a suitable catalyst, whereby a desired siloxane-modified polyester copolymer is obtained. It is preferable for the objects of the invention to react them at such a ratio that siloxane segments amount to 5-80 wt% of the resulting copolymer, although they can be reacted at a desired ratio. If the siloxane compound is used in an unduly small proportion, the siloxane-modified polyester resin which is to be obtained eventually will be insufficient in non-tacky property and blocking resistance. On the other hand, an unduly large proportion will result in a siloxane-modified polyester resin having reduced film formability and film strength. It is therefore not preferred to use the siloxane compound in such an unduly large or small proportion.

The copolymer obtained as described above contains one or more non-reactive siloxane compounds, which were contained in the siloxane compound employed, as they are. These non-reactive siloxane compounds are contained as impurities, usually accounting for about 1.0-5 wt.% of the copolymer, although this total content varies depending on the kind and proportion of the siloxane compound polymerized.

It is difficult to remove such impurities in the stage of raw material. The present invention has however made it possible to easily remove them by processing the polymerization product under reduced pressure of 13.33 hPa (10 mmHg) or lower, preferably 6.665 hPa (5 mmHg) or lower at about 100-250°C, preferably in an inert gas atmosphere such as nitrogen gas immediately or sometime after the polymerization, whereby a polyester resin substantially free of unreacted siloxane compounds and useful in the practice of the invention can be obtained. The term "substantially free" as used herein means that the total content of unreacted siloxane compounds is less than 1.0%.

The polyester resin usable in the invention may have a desired molecular weight. Those having a molecular weight in a range of from about 1,000 to 30,000 or so are however preferred in view of the ease and convenience upon use. For the regulation of the molecular weight, a conventional technique can be used as is. The copolymer contains reactive hydroxyl groups at ends thereof so that is can be crosslinked (hardened) with one of various crosslinking agents (hardening agents).

Although the polyester resin usable in the invention can by itself form a coating excellent in non-tacky property, lubricating property, blocking resistance and the like but also in transfer resistance, bleed resistance and so on, a crosslinked coating having still better physical properties can be obtained by crosslinking the polyester resin with one of various crosslinking agents upon formation of the coating.

As the crosslinking agent, compounds containing at least two functional groups capable of reacting with terminal hydroxyl groups of the polyester resin, for example, polyisocyanate compounds, polyepoxy compounds and the like can all be used. In addition, crosslinking with a crosslinking agent containing a hydroxyl group, amino group, aldehyde group or the like is also feasible provided that the terminal hydroxyl groups are modified with other functional groups. Particularly preferred crosslinking agents are polyisocyanate compounds.

Conventionally known polyisocyanates are all usable. Preferable exemplary polyisocyanates include 4,4'-diphenylmethanediisocyanate (MDI), hydrogenated MDI, isophorone diisocyanate, 1,3-xylylene diisocyanate, 1,4-xylylene diisocyanate, 2,4-tolylenediisocyanate, 2,6-tolylenediisocyanate, 1,5-naphthalenediisocyanate, m-phenylenediisocyanate and p-phenylenediisocyanate. It is of course possible to use urethane prepolymers which have been obtained by reacting these polyisocyanates with low-molecular-weight polyols or polyamines to form terminate isocyanate groups.

A coating crosslinked by any one of such crosslinking agents is excellent not only in non-tacky property, lubricating property, blocking resistance and the like but also in transfer resistance, bleed resistance and so on and moreover, has high strength.

The present invention will hereinafter be described more specifically by the following examples, comparative examples and application examples, in which all designations of "part or parts" and "%" are on weight basis unless otherwise specifically indicated.

### Example 1 (Reference)

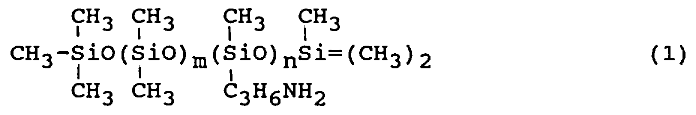

wherein m and n are values to give an amine equivalent of 3,800.

In a reactor equipped with a stirrer, a thermometer, a nitrogen gas inlet tube and a reflux condenser, 240 parts of ε-caprolactone, 100 parts of an amino-modified siloxane oil having the above structure (1) and 0.05 part of tetrabutyl titanate were charged. They were reacted at 180°C for 10 hours under a nitrogen gas stream. The viscosity of the reaction mixture increased as the reaction proceeded.

The reaction was then continued further at 180°C under reduced pressure of 6.665 hPa (5 mmHg) for 1 hour, whereby the reaction was completed and, at the same time, non-reactive siloxane compounds contained in the raw material siloxane compound and any unreacted portion of the amino-modified siloxane oil were removed completely. The total amount of removed unreacted siloxane compounds was 15 parts.

The resultant product was a waxy polysiloxanepolyester copolymer having a hydroxyl value of 16 and a melting point of 72°C. The copolymer was dissolved in methyl ethyl ketone to form a 30% solution.

### Example 2 (Reference)

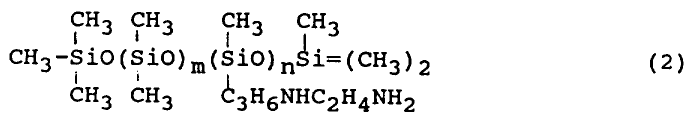

wherein m and n are values to give an amine equivalent of 3,500.

In a similar manner to Example 1, 160 parts of e-caprolactone, 140 parts of an amino-modified siloxane oil having the above structure (2) and 0.04 part of tetrabutyl titanate were charged and reacted at 180°C for 10 hours under a nitrogen gas stream. The viscosity of the reaction mixture increased as the reaction proceeded.

The reaction was then continued further at 180°C under reduced pressure of 6.665 hPa 5 mmHg for 1 hour, whereby the reaction was completed and, at the same time, non-reactive siloxane compounds contained in the raw material siloxane compound and unreacted portions of the reactants were removed completely. The total amount of removed unreacted siloxane compounds was 18 parts.

The resultant product was a waxy polysiloxanepolyester copolymer having a hydroxyl value of 18 and a melting point of 76°C. The copolymer was dissolved in methyl ethyl ketone to form a 30% solution.

### Example 3 (Reference)

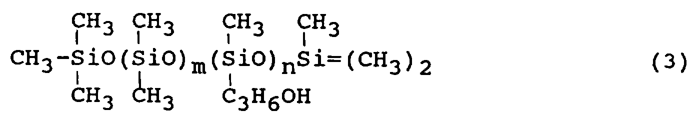

wherein m and n are values to give a hydroxyl value of 25.

In a similar manner to Example 1, 200 parts of e-caprolactone, 160 parts of an alcohol-modified siloxane oil having the above structure (3) and 0.05 part of tetrabutyl titanate were charged and reacted at 180°C for 10 hours under a nitrogen gas stream. The viscosity of the reaction mixture increased as the reaction proceeded.

The reaction was then continued further at 180°C under reduced pressure of 5.332 hPa 4 mmHg for 1 hour, whereby the reaction was completed and, at the same time, non-reactive siloxane compounds contained in the raw material siloxane compound and unreacted portions of the reactants were removed completely. The total amount of removed unreacted siloxane compounds was 18 parts.

The resultant product was a waxy polysiloxanepolyester copolymer having a hydroxyl value of 12 and a melting point of 78°C. The copolymer was dissolved in methyl ethyl ketone to form a 30% solution.

### Example 4 (Reference)

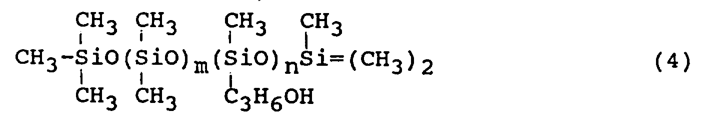

wherein m and n are values to give a hydroxyl value of 32.

In a similar manner to Example 1, 180 parts of ε-caprolactone, 160 parts of an alcohol-modified siloxane oil having the above structure (4) and 0.04 part of tetrabutyl titanate were charged and reacted at 180°C for 10 hours under a nitrogen gas stream. The viscosity of the reaction mixture increased as the reaction proceeded.

The reaction was then continued further at 180°C under reduced pressure of 3.999 hPa (3 mmHg) for 1 hour, whereby the reaction was completed and, at the same time, non-reactive siloxane compounds contained in the raw material siloxane compound and unreacted portions of the reactants were removed completely. The total amount of removed unreacted siloxane compounds was 16 parts.

The resultant product was a waxy polysiloxanepolyester copolymer having a hydroxyl value of 14 and a melting point of 75°C. The copolymer was dissolved in methyl ethyl ketone to form a 30% solution.

### (Application for the formation of coatings)

### Examples 5-8

Thirty parts of each of the copolymers obtained in Examples 1-4 were dissolved in 70 parts of methyl ethyl ketone. To 100 parts of the resultant solution, an adduct of trimethylol and tolylene diisocyanate at a molar ratio of 1:3 ("Colonate® L", trade name; product of Nippon Polyurethane Industry Co., Ltd.; NCO % = 13.5) was added in an amount to give an NCO/OH ratio of 1. The resulting coating formulation was coated on a polyester film of 100 µm thick by a gravure coater to give a dry coat thickness of 1 µm, followed by drying in a drier to form a hardened coating.

### Comparative Examples 1-4

Thirty parts of each of the modified siloxane employed in Examples 1-4 were dissolved in 70 parts of methyl ethyl ketone. To 100 parts of the resultant solution, an adduct of trimethylol and tolylene diisocyanate at a molar ratio of 1:3 ("Colonate® L", trade name; product of Nippon Polyurethane Industry Co., Ltd.; NCO % = 13.5) was added in an amount to give an NCO/OH ratio of 1. The resulting coating formulation was coated on a polyester film of 100 µm thick by a gravure coater to give a dry coat thickness of 1 µm, followed by drying in a drier to form a hardened coating.

### Comparative Example 5

In 1,000 parts of toluene, were dissolved 100 parts of a silicone resin ("KS-841", trade name; product of Shin-Etsu Chemical Co., Ltd.) and 1 part of a catalyst ("PL-7", trade name; product of Shin-Etsu Chemical Co., Ltd.). Using the resultant solution, a hardened coating was formed on a polyester film in a similar manner to Example 5 except that the drying temperature was changed to 170°C in accordance with the manufacturer's application guideline for the silicone resin.

### Evaluation 1

Each of the coated films obtained in Examples 5-8 and Comparative Examples 1-5, respectively was cut into a predetermined shape. An uncoated polyester film was superposed on the surface of the hardened coating of the coated film. While a load (2 kg/cm) was applied from the top, the thus-superposed films were left over for 3 days in an atmosphere of 50°C. The uncoated film was then peeled off, and a wettability test of its surface which had been maintained in contact with the hardened coating of the coated film was conducted in accordance with JIS K6768. In addition, the surface tension of the surface of the uncoated film was also measured. The results are shown in Table 1.

**Table 1**

| Sample | Surface tension (dyne/cm) |
|---|---|
| Blank* | 41 |
| Example 5 | 39 |
| Example 6 | 39 |
| Example 7 | 40 |
| Example 8 | 40 |
| Comp. Ex. 1 | 31 |
| Comp. Ex. 2 | 31 |
| Comp. Ex. 3 | 32 |
| Comp. Ex. 4 | 32 |
| Comp. Ex. 5 | 31 |

In the above table, smaller values indicate more transfer of unreacted siloxane compounds to the back sides.

### Evaluation 2

Each of the coating formulations prepared in Examples 5-8 and Comparative Examples 1-5, respectively was coated by a gravure coater onto the back side of a 6.0-µm thick polyester film, which had a heat-sensitive recording layer formed in advance on the front side thereof, to give a dry coat thickness of 0.5 µm. The solvent was then caused to evaporate in a drier, whereby a heat-resistant lubricating layer was formed. The thus-coated polyester film was cut in a predetermined width, so that a thermal recording material using the modified resin of the invention and a comparative thermal recording material were obtained. Recording was performed using on a thermal printer. The results are summarized in Table 2.

**Table 2**

| | Coefficient of friction | Sticking property | Head smear | Transfer to the back (dyne/cm) |
|---|---|---|---|---|
| Ex. 5 | 0.157 | 5 | 5 | 40 |
| Ex. 6 | 0.125 | 5 | 5 | 40 |
| Ex. 7 | 0.175 | 5 | 5 | 39 |
| Ex. 8 | 0.166 | 5 | 5 | 40 |
| Comp. Ex. 1 | 0.146 | 5 | 2 | 31 |
| Comp. Ex. 2 | 0.110 | 5 | 2 | 30 |
| Comp. Ex. 3 | 0.138 | 5 | 2 | 32 |
| Comp. Ex. 4 | 0.113 | 5 | 2 | 31 |
| Comp. Ex. 5 | 0.141 | 5 | 2 | 30 |
| * Without heat-resistant lubricating layer | | | | |

The coefficients of friction in Table 2 were each the measurement value of coefficient of friction between an untreated surface of a polyethylene terephthalate and the heat-resistant lubricating layer formed in the corresponding example or comparative example.

The sticking property was evaluated by subjecting each thermal recording material to a thermal recording test on an actual thermal printer and visually ranking in 5 stages the separability of the thermal recording material from the thermal head when the thermal head was repeatedly pressed against the thermal recording material. The thermal recording materials showed the best separability were ranked 5.

The head smear was evaluated by subjecting each thermal recording material to a thermal recording test on an actual thermal printer and visually observing the state of smear of the thermal head. The ranking was in 5 stages with 5 indicating the least smear.

Each transfer to the back side is expressed in terms of coefficient of friction measured under the conditions of 50°C-3 days. The smaller the coefficient of friction, the less the transfer and hence the better.

It is therefore clearly understood from the foregoing results that a heat-sensitive recording material using a siloxane-modified polyester resin of the invention is significantly improved in both head smear and transfer to the back although the coefficient of friction of its heat-resistant lubricating layer becomes slightly greater.

## Claims

1. A heat-sensitive recording material construed of a base sheet, a heat-sensitive recording layer provided on one side of the base sheet and a back layer formed from a siloxane-modified polyester resin, provided on the other side of the base sheet, wherein said polyester resin comprises a copolymer of a siloxane compound containing at least one active hydrogen atom selected from the group consisting of amino, epoxy, hydroxyl, mercapto and carboxyl groups, and a lacton compound, the total content of unreacted siloxane compounds in the said copolymer being less than 1.0 wt %.

2. The heat-sensitive recording material according to Claim 1, wherein siloxane segments account for 5 to 80 wt % of the copolymer.

3. The heat-sensitive recording material according to Claim 1, wherein the copolymer has been crosslinked with a polyfunctional compound.

4. The heat-sensitive recording material according to Claim 3, wherein the polyfunctional compound is a polyisocyanate compound.

## Patentansprüche

1. Wärmeempfindliches Aufzeichnungsmaterial, das aus einer Grundfolie, einer wärmeempfindlichen Aufzeichnungsschicht, die auf einer Seite der Grundfolie vorgesehen ist, und einer Stützschicht aufgebaut ist, die aus einem Siloxan-modifizierten Polyesterharz gebildet und auf der anderen Seite der Grundfolie vorgesehen ist, worin das Polyesterharz ein Copolymer einer Siloxan-Verbindung, die mindestens einen aktiven Wasserstoff enthält, wobei dieses Atom der Gruppe angehört, die aus Amino-, Epoxy-, Hydroxyl-, Mercapto- und Carboxylgruppen besteht, und einer Lacton-Verbindung umfaßt, wobei der Gesamtgehalt an unumgesetzten Siloxan-Verbindungen in dem Copolymer weniger als 1,0 Gew.-% beträgt.

2. Wärmeempfindliches Aufzeichnungsmaterial nach Anspruch 1, in dem die Siloxan-Segmente 5 bis 80 Gew.-% des Copolymers ausmachen.

3. Wärmeempfindliches Aufzeichnungsmaterial nach Anspruch 1, in dem das Copolymer mit einer polyfunktionellen Verbindung vernetzt worden ist.

4. Wärmeempfindliches Aufzeichnungsmaterial nach Anspruch 3, in dem die polyfunktionelle Verbindung eine Polyisocyanat-Verbindung ist.

## Revendications

1. Matériau d'enregistrement sensible à la chaleur, composé d'une feuille de base, d'une couche d'enregistrement sensible à la chaleur, disposée sur un côté de la feuille de base, et d'une couche de renfort formée à partir d'une résine polyester modifiée par siloxane, disposée sur l'autre côté de la feuille de base, dans lequel ladite résine polyester comprend un copolymère d'un composé siloxane contenant au moins un atome d'hydrogène actif choisi dans le groupe constitué par les groupes amino, époxy, hydroxyle, mercapto et carboxyle, et d'un composé lactone, la teneur totale en composés siloxanes n'ayant pas réagi dans ledit copolymère étant inférieure à 1,0% en poids.

2. Matériau d'enregistrement sensible à la chaleur selon la revendication 1, dans lequel les segments de siloxane représentent de 5 à 80% en poids du copolymère.

3. Matériau d'enregistrement sensible à la chaleur selon la revendication 1, dans lequel le copolymère a été réticulé par un composé polyfonctionnel.

4. Matériau d'enregistrement sensible à la chaleur selon la revendication 3, dans lequel le composé polyfonctionnel est un composé polyisocyanate.
